Europäisches Patentamt

European Patent Office

Office européen des brevets

(19)

(11) Veröffentlichungsnummer: **0 050 270**
**B1**

(12) **EUROPÄISCHE PATENTSCHRIFT**

(45) Veröffentlichungstag der Patentschrift:
08.08.84

(51) Int. Cl.³: **B 23 F 21/16**, B 23 C 5/12

(21) Anmeldenummer: 81108029.0

(22) Anmeldetag: 07.10.81

(54) Wälzfräser mit Wendeschneidplatten.

(30) Priorität: 16.10.80 DE 3039076

(43) Veröffentlichungstag der Anmeldung:
28.04.82 Patentblatt 82/17

(45) Bekanntmachung des Hinweises auf die Patenterteilung:
08.08.84 Patentblatt 84/32

(84) Benannte Vertragsstaaten:
BE FR GB IT NL SE

(56) Entgegenhaltungen:
CH - A - 359 957
DE - A - 1 918 200
FR - A - 338 191
GB - A - 119 569
GB - A - 209 033
US - A - 4 102 583

(73) Patentinhaber: **Wilhelm Fette GmbH, Postfach 1180, D-2053 Schwarzenbek (DE)**

(72) Erfinder: **Bentjens, Bernd, Falkenweg 17, D-2053 Schwarzenbek (DE)**

(74) Vertreter: **Minetti, Ralf, Dipl.-Ing., Bailindamm 15, D-2000 Hamburg 1 (DE)**

BUNDESDRUCKEREI BERLIN

## Beschreibung

Die Erfindung betrifft einen Wälzfräser mit Wendeschneidplatten zur Herstellung von Verzahnungen.

Bekannt ist ein Wälzfräser (DE-OS 2 700 525) bei dem die aus Hartmetall bestehenden Wendeschneidplatten schraubenlinienförmig verteilt auf scheibenförmigen Zahnkränzen angeordnet sind, welche planparallele Stirnflächen aufweisen. Dadurch läßt sich erreichen, daß die Plattensitze durch Fräsen erzeugt werden können und bei einem Verschleiß einzelner Plattensitze nicht das gesamte Werkzeug ausgewechselt zu werden braucht, sondern einzelne Teile ausgewechselt werden können. Ein Nachteil der bekannten Anordnung liegt jedoch darin, daß bei einer gleichförmigen Gestaltung der scheibenförmigen Zahnkränze kein Versatz der einzelnen Zähne zueinander gegeben ist. Ein drallförmiger Versatz der Zähne ist jedoch zweckmäßig, weil der Wälzfräser beim Einsatz ein günstigeres Schneidverhältnis ergibt und ruhiger schneidet wenn nicht mehrere oder eine Vielzahl von Zähnen gleichzeitig eingreift, sondern erst auf einanderfolgend, wobei sich die zeitliche Verzögerung ergibt aus dem Maß des Versatzes bzw. der Größe des Drallwinkels $\gamma$. Zwar ist es grundsätzlich möglich, bei Verwendung scheibenförmiger Zahnkränze, die auf ihren Zähnen Wendeschneidplatten tragen, einen Versatz der aufeinanderfolgenden zum Eingriff kommenden Zähne vorzusehen. Das würde aber voraussetzen, daß die einzelnen Scheiben nicht gleichförmig sind, so daß sich die Herstellungskosten eines solchen Wälzfräsers und auch die Lagerkosten für die Ersatzteile wesentlich erhöhen würden. Hinzu kommt, daß die Lebensdauer der Plattensitze für die Aufnahme der Schneidplatten unterschiedlich ist, weil insbesondere beim Schruppwälzfräsen ins Volle die Zahnbelastungen innerhalb des Eingriffsbereiches sehr unterschiedlich sind. Bei der bekannten Anordnung kann dem Rechnung getragen werden durch den Austausch eines vollständigen scheibenförmigen Zahnkranzes gegen einen anderen. Das setzt aber voraus, daß der Wälzfräser an der Wälzmaschine ausgespannt werden muß und in seine einzelnen Bestandteile zerlegt werden muß.

Die vorbekannten Nachteile sind ebenfalls gegeben bei einem Abwälzfräser nach der GB-PS 209 033, der aus mehreren mit planparallelen Stirnflächen versehenen Scheiben besteht, die jeweils mit einem der Fräsersteigung entsprechenden schraubenförmigen Zahnkranz versehen sind, der mit auswechselbaren Schneideinsätzen bestückt ist, denn auch bei dieser Anordnung ist nicht ein drallförmiger Versatz der Zähne benachbarter Fräsergänge gegeben, wenn die Scheiben gleichförmig ausgebildet sind, wie es diese GB-PS 209 033 vorsieht.

Hinzu kommt, daß beide vorbekannten Arten von Fräsern nur eingängig sind.

Die GB-PS 119 569 zeigt einen Walzenfräser für die Oberflächenbearbeitung ebener Flächen von Werkstücken, der mit einer schraubenlinienförmig verlaufenden Nut für die Aufnahme von Schneidmessern versehen ist, die durch mehrere Spannkeile oder durch einen Spannkeil und mehrere verschiebbar gelagerte Distanzhalter gehalten sind, die ebenfalls in der Nut liegen. Die Schneidmesser sind damit zwar austauschbar. Ein derartiger Walzenfräser läßt sich aber nicht anwenden für die Herstellung von Verzahnungen, weil es dafür der Verwendung einer anderen Gattung von Fräsern nämlich von Wälzfräsern bedarf. Diese aber sind allgemein mit Wendeschneidplatten versehen, welche an den Seiten von Zähnen tangential angeordnet sind und wendbar sind.

Aufgabe der Erfindung ist es, einen Wälzfräser zu schaffen, bei dem einzelne Bauteile mit nur wenigen Zähnen im Falle des Verschleißes oder einer Beschädigung der Plattensitze für die Aufnahme der Wendeplatten ausgetauscht werden können gegen gleichförmige Zahnträger, ohne daß eine vollständige Zahnscheibe von 360° ersetzt werden muß und ohne daß es dafür eines Ausspannens des Wälzfräsers in der Wälzmaschine bedarf. Darüber hinaus soll die Möglichkeit gegeben sein, unter Verwendung gleichförmiger, austauschbarer Teile einen Wälzfräser mit drallförmig versetzten Zähnen zu schaffen.

Als Lösung sieht die Erfindung vor, daß auf dem Grundkörper mehrere gleichartige, schraubenförmig verlaufende Zahnsegmente in einer gewindeförmigen Führung des Grundkörpers befestigt sind, wobei die Zahnsegmente unter einem drallförmigen Versatz der Schneiden benachbarter Fräsergänge zur achsparallelen Mantellinie angeordnet sind. Diese Ausbildung hat den Vorteil, daß einzelne Zahnsegmente im Falle eines Verschleißes einer oder mehrerer Plattensitze an beliebigen Stellen des Grundkörpers gegen gleichartige ausgetauscht werden können ohne daß es eines Ausspannens des Fräsers oder seiner vollständigen Zerlegung bedarf. Ein weiterer Vorteil liegt darin, daß bei der Herstellung der einzelnen Zahnsegmente die Plattensitze leicht zugänglich sind. Dadurch können kurze und stabile Arbeitswerkzeuge verwendet werden, so daß eine Plattensitzbearbeitung besonders wirtschaftlich möglich ist. Die Konstruktion ist im übrigen geeignet für die Herstellung mehrgängiger Wälzfräser im Gegensatz zu der bekannten aus Einzelscheiben bestehenden Ausführung.

Ein Ausführungsbeispiel der Erfindung ist nachstehend unter Bezugnahme auf eine Zeichnung erläutert. In der Zeichnung zeigt

Fig. 1 einen Teilausschnitt des Wälzfräsers in perspektivischer Darstellung,

Fig. 2 einen Teilausschnitt des Wälzfräsers in der Vorderansicht,

Fig. 3 einen Teillängsschnitt durch den Wälzfräser,

Fig. 4 eine Teildraufsicht auf den Wälzfräser,

Fig. 5 einen Teilquerschnitt durch ein Zahnsegment und

Fig. 6 einen dreigängigen Grundkörper in perspektivischer Darstellung und

Fig. 7 einen Schnitt durch ein Zahnsegment mit zwei Reihen von Zähnen für einen zweigängigen Fräser.

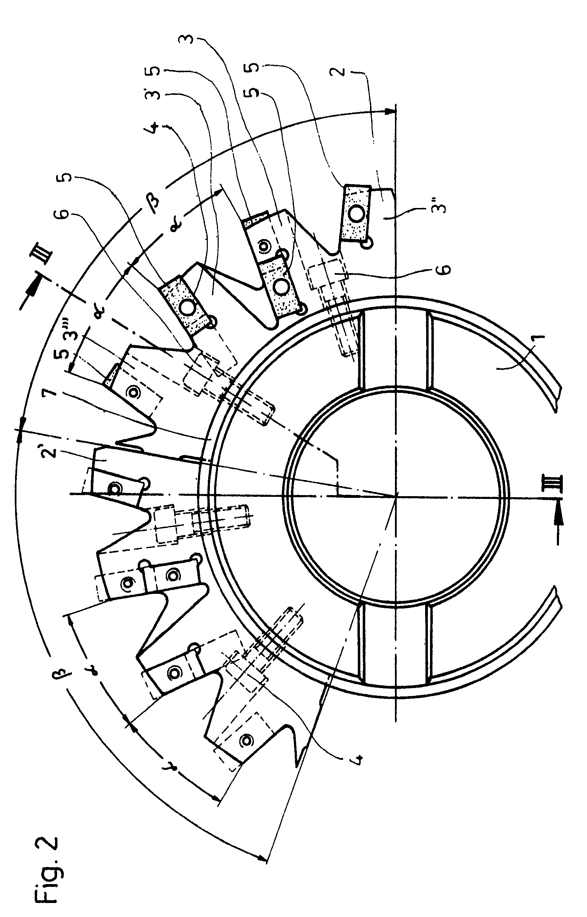

Der in der Zeichnung wiedergegebene Wälzfräser für die Herstellung von Verzahnungen besitzt einen Grundkörper 1, der mehrere schraubenförmige Zahnsegmente 2, 2' trägt. Die Zahnsegmente 2, 2' tragen jeweils 4 Zähne 3, 3', die unter einem Zahnteilungswinkel $\alpha$ stehen. Der Segmentwinkel $\beta$ beträgt bei der dargestellten Ausführungsform gemäß Fig. 2 81°.

Die einzelnen Zähne 3, 3' sind mit Kammern 4 versehen, die der Aufnahme von Wendeplatten 5 dienen. Die Wendeplatten 5 bestehen aus Hartmetall wie Wolframkarbid oder Titankarbid und sind auswechselbar in den als Plattensitzen wirksamen Kammern 4 gelagert.

Von den einzelnen Zähnen eines Zahnsegmentes 2 bzw. 2' trägt der eine Zahn 3 und 3' jeweils zwei Wendeplatten 5 auf beiden Seiten höhenmäßig versetzt zueinander und in der Lage wechselseitig zu dem daneben stehenden Zahn. Die Zähne 3'' und 3''' tragen demgegenüber lediglich eine Wendeplatte 5 und zwar jeweils auf einander gegenüberliegenden Seiten, wie die Fig. 2 insbesondere in ihrem rechten Teil erkennen läßt.

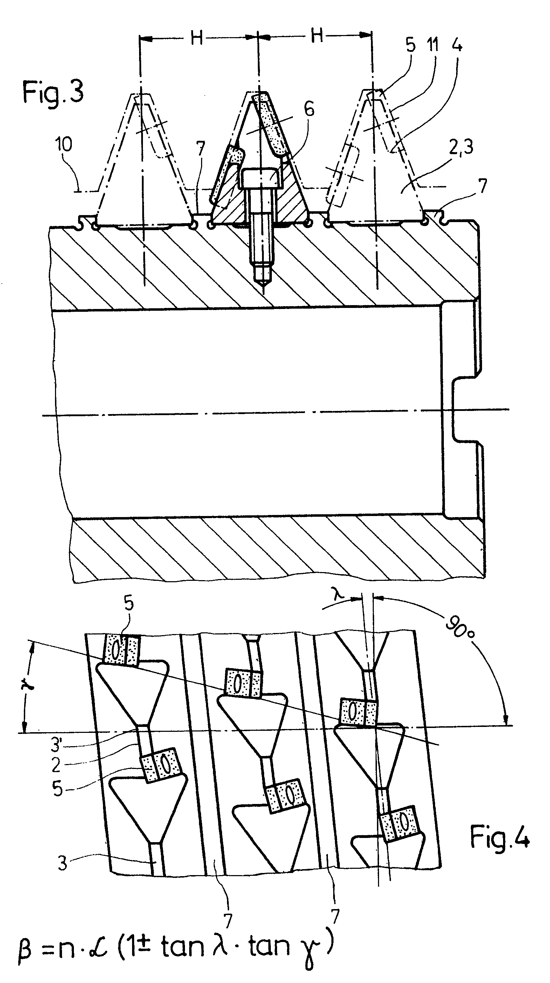

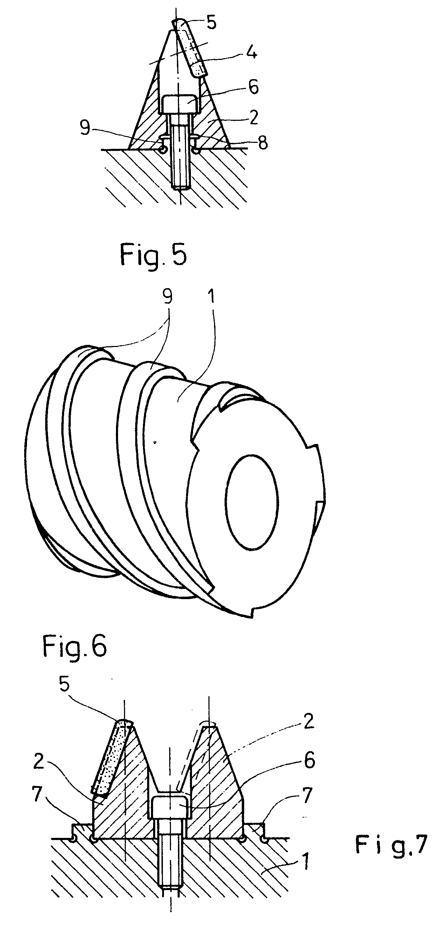

Die Befestigung der Zahnsegmente 2, 2' auf dem Grundkörper 1 erfolgt durch sich radial erstreckende Schrauben 6, von denen jeweils zwei Schrauben für die Halterung eines Zahnsegmentes 2 bzw. 2' vorgesehen sind. Darüber hinaus erfolgt die Halterung der Zahnsegmente 2 bei der Ausführung Fig. 3 durch schraubenförmige Führungsstege 7 des Grundkörpers 1, welche die Zahnsegmente 2 an ihren Außenflächen abstützen. Bei einer davon abweichenden Ausführungsform nach Fig. 5 sind die einzelnen Zahnsegmente 2 bodenseitig mit einer mittig angeordneten schraubenlinienförmigen Führungsnut 8 versehen, in die ein schraubenförmiger Führungssteg 9 eingreift. Bei beiden Ausführungsformen besteht die Möglichkeit, nach einem Lösen der Schrauben 6 ein Zahnsegment 2 radial vom Grundkörper 1 abzunehmen, ohne den Wälzfräser im übrigen zerlegen zu müssen oder ihn auch nur aus der Wälzmaschine auszuspannen.

Wird ein Segmentwinkel $\beta$ gewählt unter Berücksichtigung der Gleichung

$$\beta = n \times \alpha (1 \pm \tan\lambda \times \tan\gamma),$$

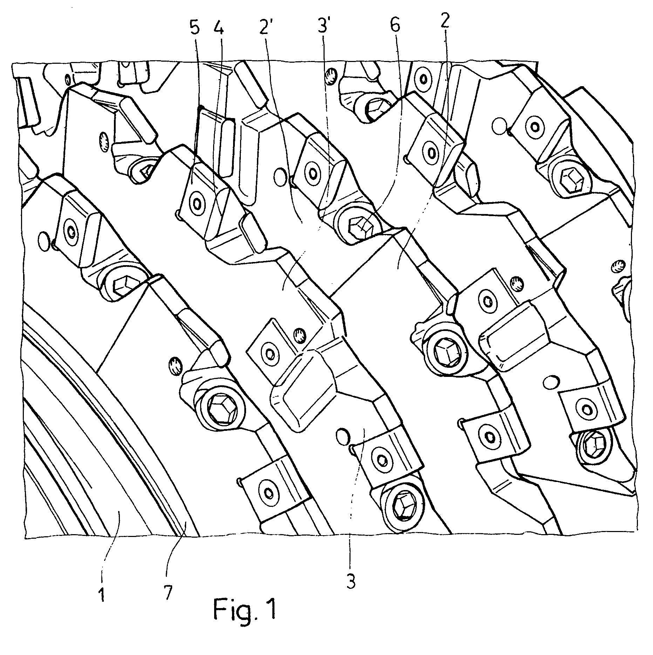

wobei n der Anzahl der Zähne eines Segmentes entspricht, so ergibt sich bei Verwendung von Zahnsegmenten gemäß Fig. 2 ein Zahnversatz entsprechend Fig. 4, in welcher der Wälzfräser-Steigungswinkel $\lambda$ eingetragen ist wie auch der Drallwinkel $\gamma$. Aus der Zeichnung ergibt sich, daß die Fräserschraube nach Fig. 1, 3 eingängig ist und der berechneten Wälzfräsersteigung H entspricht. Durch die geeignete Festlegung des Segmentwinkels $\beta$ kommen die Kofpschneiden benachbarter Gänge des Wälzfräsers drallförmig nacheinander zum Eingriff, wie besonders deutlich die Fig. 1 und 4 erkennen lassen. Dadurch wird die Laufruhe beim Schnittprozeß begünstigt auch bei Anwendung gleichförmiger Zahnsegmente 2. Darüber hinaus sind die Plattensitze bzw. Kammern 4 für die Aufnahme der Wendeplatten 5 leicht zugänglich, so daß eine besonders wirtschaftliche Nachbearbeitung möglich ist.

Das zu bearbeitende Werkstück ist in Fig. 3 mit 10 bezeichnet, in der deutlich erkennbar ist, wie weit die Wendeplatten 5 über die Zähne 3 eines Zahnsegmentes 2 hinausstehen, um das in strichpunktierter Linie wiedergegebene Bezugsprofil 11 des zu fräsenden Werkstückes 10 zu schaffen.

Statt eines Grundkörpers mit mehreren Gängen entsprechend der Fig. 6 können auch Zahnsegmente vorgesehen werden, die jeweils mehr als eine Reihe von Zähnen tragen, so daß sich dadurch entsprechend der Fig. 7 ebenfalls ein mehrgängiger Wälzfräser ergibt.

**Patentansprüche**

1. Wälzfräser mit Wendeschneidplatten, dadurch gekennzeichnet, daß auf einem Grundkörper (1) mehrere gleichartige, schraubenförmig verlaufende Zahnsegmente (2, 2') in einer gewindeförmigen Führung (7, 8, 9) des Grundkörpers (1) unter einem drallförmigen Versatz ($\gamma$) der Schneiden benachbarter Fräsergänge zur achsparallelen Mantellinie angeordnet sind.

2. Wälzfräser nach Anspruch 1, dadurch gekennzeichnet, daß alle Zähne (3, 3', 3'', 3''') am Kopf wechselseitig aufeinander folgend jeweils eine Wendeschneidplatte (5) tragen und einzelne Zähne (3, 3') am Fuß wechselseitig aufeinander folgend eine zusätzliche Wendeplatte (5) tragen.

3. Wälzfräser nach einem oder beiden der vorhergehenden Ansprüche, dadurch gekennzeichnet, daß die Zahnsegmente (2, 2') auf ihrem Boden mit einer mittig angeordneten Führungsnut (8) versehen sind, in die ein schraubenförmiger Führungssteg (9) des Fräserkörpers (1) eingreift.

4. Wälzfräser nach einem oder mehreren der vorhergehenden Ansprüche, dadurch gekennzeichnet, daß der Fräserkörper (1) mit schraubenförmigen Führungsstegen (7) versehen ist, welche die Zahnsegmente (2) an ihren Außenflächen abstützen.

5. Wälzfräser nach einem oder mehreren der vorhergehenden Ansprüche, dadurch gekennzeichnet, daß die Zahnsegmente mehr als eine Reihe von Zähnen (3) tragen.

6. Wälzfräser nach einem oder mehreren der vorhergehenden Ansprüche, dadurch gekennzeichnet, daß die Zahnsegmente (2, 2') einen Segmentwinkel ($\beta$) aufweisen, der in 360° nicht ganzzahlig teilbar ist.

## Claims

1. Hob with rotatable cutting plates, characterised in that several helical running toothed quadrants (2, 2') of the same kind are placed on a basic body (1) in a thread-shaped guide (7, 8, 9) of the basic body (1) under a torsion-shaped misalignment (γ) of the cutters of adjacent milling cutter corridors respectively to the generating line which is parallel to the axis.

2. Hob with rotatable cutting plates according to claim 1, characterised in that all the teeth (3, 3', 3'', 3''') bear on the nose respectively one rotatable cutting plate (5) following each other alternately and that some teeth (3, 3') bear one supplementary cutting plate (5) on the base following each other alternately.

3. Hob according to one or both several preceding claims, characterised in that the toothed quadrants (2, 2') are provided on their bottom with a centric guiding groove (8) in which a helical guide web (9) of the hob body (1) engages.

4. Hob according to one or several preceding claims, characterised in that the hob body (1) is provided with helical guide webs (7) which support the toothed quadrants (2) on their outsides.

5. Hob according to one or several preceding claims, characterised in that the toothed quadrants bear more than teeth (3) row.

6 Hob according to one or several preceding claims, characterised in that the toothed quadrants (2, 2') show a quadrant angle (β) of which 360° is not an integral multiple.

## Revendications

1. Fraise-mère à plaquettes de coupe tournantes, caractérisée en ce que plusieurs segments dentés (2, 2') similaires, allant en forme d'hélice, sont placés sur un corps de base (1) dans un guide (7, 8, 9) en forme de filet du corps de base (1) sous un chevauchement en forme de torsion (γ) des lames de couloirs de fraises avoisinnants, chevauchement en forme de torsion par rapport à la génératrice parallèle à l'axe.

2. Fraise-mère selon la revendication 1, caractérisée en ce que toutes les dents (3, 3', 3'', 3''') portent sur la tête respectivement une plaquette de coupe tournante (5) en se suivant en alternance et que quelques dents (3, 3') portent une plaquette de coupe tournante supplémentaire au pied en se suivant en alternance.

3. Fraise-mère selon l'une des revendications précédentes ou selon les deux, caractérisée en ce que les segments dentés (2, 2') sont pourvus à leur base d'une rainure de guidage (8) placée en leur milieu, dans laquelle s'engrène une nervure de guidage (9) hélicoïdale du corps de fraise (1).

4. Fraise-mère selon une ou plusieurs revendications précédentes, caractérisée en ce que le corps de fraise (1) est pourvu de nervures de guidage hélicoïdales qui supportent les segments dentés (2) à leurs surfaces extérieures.

5. Fraise-mère selon une ou plusieurs revendications précédentes, caractérisée en ce que les segments dentés portent plus d'une rangée de dents (3).

6. Fraise-mère selon une ou plusieurs revendications précédentes, caractérisée en ce que les segments dentés (2, 2') présentent un angle de segment (β) dont 360° n'est pas un multiple entier.

Fig. 1

Fig. 2

Fig.3

$$\beta = n \cdot \mathcal{L} \left( 1 \pm \tan \lambda \cdot \tan \gamma \right)$$

Fig.4

Fig. 5

Fig. 6

Fig. 7